(19) Europäisches Patentamt / European Patent Office / Office européen des brevets

(11) **EP 2 790 035 B1**

(12) **FASCICULE DE BREVET EUROPEEN**

(45) Date de publication et mention
de la délivrance du brevet:
**18.11.2015 Bulletin 2015/47**

(51) Int Cl.:
***G01S 19/09*** *(2010.01)*   ***G01S 5/00*** *(2006.01)*
***G01S 19/24*** *(2010.01)*   ***G01S 19/37*** *(2010.01)*

(21) Numéro de dépôt: **14158240.3**

(22) Date de dépôt: **07.03.2014**

(54) **Procédé et dispositif de compression d'un signal de radio-navigation large bande, procédé et dispositif associés de calcul de la fonction de corrélation du code d'étalement dudit signal compressé**

Verfahren und Vorrichtung zur Kompression eines Breitband-Funk-Navigationssignals, entsprechendes Verfahren und entsprechende Vorrichtung zur Berechnung der Korrelationsfunktion des Streuungskodes dieses komprimierten Signals

Method and device for compressing a broadband radionavigation signal, related method and device for calculating the correlation function of the spreading code of said compressed signal

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **15.03.2013 FR 1300579**

(43) Date de publication de la demande:
**15.10.2014 Bulletin 2014/42**

(73) Titulaire: **Thales**
**92400 Courbevoie (FR)**

(72) Inventeur: **Revol, Marc**
**26120 Upie (FR)**

(74) Mandataire: **Hammes, Pierre et al**
**Marks & Clerk France**
**Immeuble Visium**
**22, avenue Aristide Briand**
**94117 Arcueil Cedex (FR)**

(56) Documents cités:
**WO-A1-95/04941    US-B1- 7 436 907**

• **CHUNG YANG: "Frequency-Domain GPS Baseband Processor Design And Initial Test Results", PROCEEDINGS OF THE INSTITUTE OF NAVIGATION (ION) GPS, XX, XX, 11 septembre 2001 (2001-09-11), pages 2859-2870, XP007901922,**

**Description**

La présente invention concerne le domaine des systèmes de radio-navigation par satellite. Il concerne un procédé et un dispositif de compression d'un signal de radio-navigation large bande, tel que reçu par un récepteur GNSS, dans le but de transmettre ce signal compressé sur une liaison à bande étroite. L'invention concerne également un procédé et un dispositif de calcul de la fonction de corrélation du code d'étalement dudit signal compressé lorsqu'il est reçu par un récepteur.

La demande de brevet française de la Demanderesse déposée sous le numéro 12 01709 décrit un système de navigation par satellite à architecture déportée comprenant une pluralité de terminaux de radio-navigation par satellite et une station centralisée comprenant des moyens mutualisés pour réaliser sur le signal de radio-navigation, les traitements, habituellement réalisés par un terminal, en exploitant les capacités renforcées de cette station.

Un système de radio-navigation par satellite comprenant une station centralisée dans laquelle sont déportés une partie ou la totalité des calculs de radio-navigation habituellement effectués par un récepteur nécessite une liaison de communication spécifique entre les terminaux GNSS et la station centrale. Cette liaison est typiquement, une liaison à bande étroite, par exemple une liaison VHF qui est limitée à une bande de fréquence inférieure à la centaine de kHz. Or un signal de radio-navigation par satellite est un signal large bande qui nécessite plusieurs MHz de bande, sa transmission sur une liaison à bande étroite nécessite donc une adaptation, autrement dit une compression permettant de transmettre toute l'information utile contenue dans le signal sur un canal de transmission qui n'est pas compatible nativement de la bande large du signal.

Une solution connue pour transmettre un signal GNSS sur un canal à bande étroite consiste à envoyer les données par rafales de façon non continue. Cette solution nécessite une synchronisation de la transmission par rafales avec les données utiles transmises par le satellite afin de ne pas engendrer de perte d'information.

L'invention propose une solution différente de celles connues permettant de transmettre de façon continue, un signal GNSS large bande sur un canal de transmission à bande étroite en effectuant une compression de ce signal. En outre l'invention permet également de réaliser de façon optimisée, le calcul de la fonction de corrélation du signal GNSS directement sur le signal compressé reçu.

L'invention a ainsi pour objet un procédé de compression d'un signal de radio-navigation par satellite large bande pour sa transmission sur un canal bande étroite, ledit procédé étant caractérisé en ce qu'il comporte les étapes suivantes :

- Une étape de réception d'un signal de radio-navigation par satellite,
- Une étape de transformation spectrale dudit signal en une pluralité N de canaux fréquentiels de largeur de bande réduite,
- Une étape de décalage temporel de chacun des signaux canalisés d'un retard prédéterminé distinct, le retard étant configuré de sorte à être supérieur à la durée du support de corrélation du code d'étalement d'un signal canalisé,
- Une étape d'accumulation des signaux canalisés décalés pour produire un signal compressé.

Selon un aspect particulier du procédé de compression selon l'invention, l'étape de transformation spectrale est réalisée au moyen d'une transformée de Fourier rapide.

Selon un aspect particulier du procédé de compression selon l'invention, ledit retard prédéterminé est égal à un multiple, différent pour chacun des signaux canalisés, d'un retard $\Delta T$ prédéterminé de durée supérieure à la durée du support de corrélation du code d'étalement d'un signal canalisé.

Selon un aspect particulier du procédé de compression selon l'invention, la durée du support de corrélation du code d'étalement d'un signal canalisé est égale à l'inverse de la largeur d'un canal fréquentiel.

Selon un aspect particulier du procédé de compression selon l'invention, la pluralité N de canaux fréquentiels couvre l'intégralité de la large bande du signal de radio-navigation.

Selon une variante de réalisation du procédé de compression selon l'invention, il comporte en outre une étape de sélection d'un sous-ensemble de M canaux parmi la pluralité N de canaux fréquentiels, lesdites étapes de décalage temporel et d'accumulation étant réalisées uniquement pour les M signaux canalisés dudit sous-ensemble.

La sélection dudit sous-ensemble de M canaux peut être réalisée périodiquement par un tirage aléatoire parmi les N canaux disponibles.

L'invention a également pour objet un procédé de calcul de la fonction de corrélation du code d'étalement d'un signal de radio-navigation par satellite compressé par application du procédé de compression selon l'invention caractérisé en ce qu'il comporte les étapes suivantes :

- Une étape de réception d'un signal compressé transmis sur bande étroite,
- Une étape de transformation spectrale d'un code d'étalement généré localement en une pluralité N de canaux fréquentiels,

- Une étape de décalage temporel dudit signal compressé reçu d'une pluralité de retards prédéterminés distincts pour obtenir une pluralité de signaux retardés, lesdits retards étant configurés de sorte à être supérieurs à la durée du support de corrélation du code d'étalement canalisé, le nombre de signaux retardés étant égal au nombre N de canaux fréquentiels,

- Une étape de calcul du produit complexe conjugué deux à deux entre un signal retardé et un canal du spectre dudit code d'étalement généré localement pour obtenir un signal intermédiaire,

- Une étape de calcul de la transformée de Fourier inverse dudit signal intermédiaire pour obtenir la fonction de corrélation du code d'étalement dudit signal de radio-navigation.

Selon un aspect particulier du procédé de calcul selon l'invention, l'étape de transformation spectrale est réalisée au moyen d'une transformée de Fourier rapide.

Selon un aspect particulier du procédé de calcul selon l'invention, lesdits retards prédéterminés sont égaux à un multiple, différent pour chaque retard, d'un retard $\Delta T$ prédéterminé de durée supérieure à la durée du support de corrélation du code d'étalement canalisé.

L'invention a également pour objet un dispositif de compression d'un signal de radio-navigation par satellite large bande pour sa transmission sur un canal à bande étroite caractérisé en ce qu'il comporte :

- Un moyen pour transformer spectralement ledit signal en une pluralité N de canaux fréquentiels de largeur de bande réduite,

- Des moyens pour décaler temporellement chacun des signaux canalisés d'un retard prédéterminé distinct, le retard étant configuré de sorte à être supérieur à la durée du support de corrélation d'un signal canalisé,

- Des moyens pour accumuler lesdits signaux canalisés décalés pour produire un signal compressé.

L'invention a également pour objet un terminal émetteur comprenant des moyens de réception d'un signal de radio-navigation par satellite, un dispositif de compression dudit signal de radio-navigation par satellite selon l'invention et des moyens de transmission dudit signal compressé sur un canal à bande étroite.

L'invention a également pour objet un dispositif de calcul de la fonction de corrélation du code d'étalement d'un signal de radio-navigation par satellite caractérisé en ce qu'il comporte:

- Un moyen pour transformer spectralement un code d'étalement généré localement en une pluralité N de canaux fréquentiels,

- Des moyens pour décaler temporellement ledit signal de radio-navigation d'une pluralité de retards prédéterminés distincts pour obtenir une pluralité de signaux retardés, lesdits retards étant configurés de sorte à être supérieurs à la durée du support de corrélation du code d'étalement canalisé,

- Des moyens de calcul du produit complexe conjugué deux à deux entre un signal retardé et un canal du spectre dudit code d'étalement généré localement pour obtenir un signal intermédiaire,

- Des moyens de calcul de la transformée de Fourier inverse dudit signal intermédiaire pour obtenir la fonction de corrélation du code d'étalement dudit signal de radio-navigation.

L'invention a également pour objet une station réceptrice comprenant des moyens pour recevoir un signal de radio-navigation compressé sur bande étroite et un dispositif, selon l'invention, de calcul de la fonction de corrélation du code d'étalement dudit signal de radio-navigation compressé reçu.

D'autres caractéristiques et avantages de la présente invention apparaîtront mieux à la lecture de la description qui suit en relation aux dessins annexés qui représentent :

- La figure 1, un schéma d'un système de radionavigation par satellite comprenant une pluralité de terminaux GNSS adaptés, selon l'invention, à communiquer avec une station de calcul centralisée,

- La figure 2, un organigramme du procédé, selon l'invention, de compression d'un signal de radio-navigation large-bande pour le transmettre sur un canal de transmission à bande étroite,

- La figure 3, un synoptique d'un module de compression destiné à être implémenté dans un terminal émetteur et comprenant des moyens adaptés pour mettre en oeuvre le procédé décrit à la figure 2,

- La figure 4, un organigramme du procédé, selon l'invention, de calcul de la fonction de corrélation du code d'étalement d'un signal de radio-navigation compressé selon le procédé de la figure 2,

- La figure 5, un synoptique d'un module de corrélation destiné à être implémenté dans un terminal récepteur et comprenant des moyens adaptés pour mettre en oeuvre le procédé décrit à la figure 4.

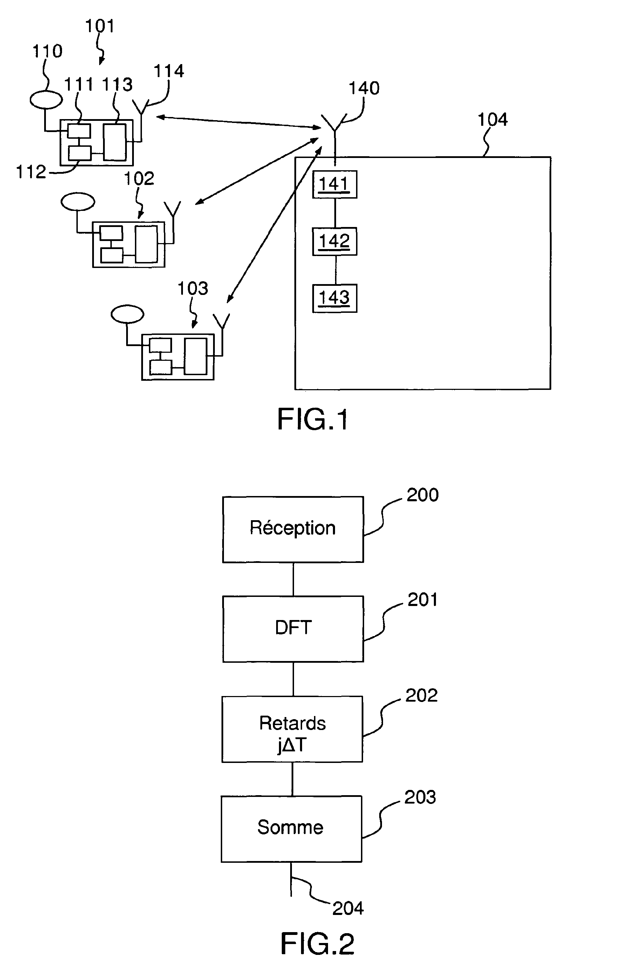

La figure 1 décrit, sur un synoptique, un système de radio-navigation par satellite tel que décrit dans la demande antérieure 12 01709 qui comprend une pluralité de récepteurs 101,102,103 aptes à recevoir des signaux de radio-navigation par satellite émis par les satellites en visibilité desdits récepteurs et une station de calcul de référence 104 qui réalise un ensemble de traitements pour la détermination de données de navigation (PVT) de façon centralisée de sorte d'une part à permettre une diminution de la complexité des traitements mis en oeuvre dans les récepteurs 101,102,103 et d'autre part de sécuriser les traitements de réception des signaux, en particulier dans le cas de signaux cryptés. Ces traitements incluent notamment l'extraction de mesures brutes de phase de code et de phase de porteuse ainsi que la démodulation des messages de navigation.

Chaque récepteur 101,102,103 comporte une antenne 110 de réception des signaux de radio-navigation par satellite, un module RF 111 de réception desdits signaux et de transposition vers une fréquence intermédiaire et un convertisseur analogique numérique, un module 112, selon l'invention de compression du signal de radio-navigation reçu et des moyens de communication bande étroite 113, par exemple dans une bande de fréquence VHF, adaptés pour transmettre les signaux de radio-navigation compressés selon l'invention et transposés en fréquence intermédiaire ou en bande de base vers la station de référence 104. A cette fin, chaque récepteur 101,102,103 comporte également une antenne 114 pour la transmission des signaux compressés obtenus en fréquence intermédiaire ou en bande de base vers la station de référence 104.

La station de référence 104 comporte au moins une antenne 140 d'émission/réception permettant de communiquer avec les récepteurs 101,102,103 via une liaison de communication bande étroite. L'antenne 140 est par exemple une antenne VHF. Elle comporte également des moyens 141 de réception associés à l'antenne VHF pour recevoir le signal compressé transmis par les récepteurs sur la liaison VHF. La station de référence 104 comporte également un module 142 de calcul de la fonction de corrélation du code d'étalement du signal compressé reçu et des moyens 143 de calcul pour, à partir notamment de la fonction de corrélation, établir des informations de position, vitesse et temps (PVT).

La figure 2 représente un organigramme du procédé de compression d'un signal de radio-navigation selon l'invention. Ce procédé peut être exécuté par le module 112 de compression que comporte un récepteur 101,102,103.

Le procédé de compression selon l'invention comporte au moins une étape 200 de réception d'un signal de radio-navigation par satellite, par le biais de moyens de réception comprenant au moins une antenne GNSS.

Dans une étape 201, une conversion spectrale du signal reçu est effectuée, par exemple par le biais d'une transformée de Fourier directe. Avantageusement, cette opération est réalisée sur le signal numérisé et en utilisant une transformée de Fourier discrète. Elle a pour but d'effectuer un découpage de la large bande du signal GNSS en une pluralité de canaux à bandes de fréquences plus étroites. Le nombre de canaux est choisi de sorte que la bande de fréquences d'un canal soit au plus égale à la bande de fréquences disponible sur le canal de transmission visé. En sortie de l'étape 201, le signal de radio-navigation est donc décomposé en une pluralité de signaux canalisés fréquentiellement.

Dans une étape 202, un retard temporel différent est appliqué à chacun des signaux canalisés dans le but de réaliser un entrelacement temporel de ces signaux de sorte à ce que, en réception leurs fonctions de corrélations ne se superposent pas, ce qui induirait des interférences et au final une perte d'information. Avantageusement le retard temporel peut être égal à $j.\Delta T$, où $j$ est un entier positif différent pour chaque signal canalisé et $\Delta T$ est un retard temporel fixe prédéterminé au moins supérieur à la durée du support de corrélation du code d'étalement du signal. L'expression support de corrélation désigne le domaine temporel où la fonction de corrélation du code d'étalement du signal GNSS n'est pas nulle. Par exemple, le code d'étalement de base des signaux de radio-navigation GPS C/A, est une séquence périodique de 1023 états pseudo-aléatoires de la phase du signal. Un état correspond à une modulation à 0 ou à $\pi$ de la phase de la porteuse, chacun des états ayant une durée de 1 $\mu$s. La longueur d'une séquence de code d'étalement est dans ce cas égale à 1,023 ms.

Du fait de la structure pseudo-aléatoire du code d'également employé pour un signal de radio-navigation GPS C/A, la fonction de corrélation d'un tel code est une fonction "triangle" présentant son maximum pour un retard nul et s'annulant pour des retards supérieurs à une durée de 1$\mu$s.

Le code étant périodique, cette fonction de corrélation est elle-même périodique et de même période 1.023 ms. Dans ce cas, le support de corrélation est de durée égale à 1$\mu$s. il suffit donc que deux signaux soient décalés de plus de 1$\mu$s (mais de moins de 1 ms en raison des périodicités), pour qu'ils ne soient pas corrélés.

En pratique, le signal étant canalisé lors de l'étape 201 en sous-bandes de largeur spectrales réduites, il suffit que le retard temporel $\Delta T$ soit au moins supérieur à $1/\Delta f$, où $\Delta f$ est la largeur de bande d'un canal. En effet, le support de corrélation du code d'étalement filtré est sensiblement égal à $1/\Delta f$.

Ainsi, les signaux canalisés sont décalés temporellement et mutuellement les uns des autres d'un retard au moins supérieur au support de corrélation du code d'étalement filtré dans chaque canal d'analyse. Cette superposition temporelle des signaux n'implique aucune ambigüité en réception, du fait du décalage des fonctions de corrélation, et permet la recomposition de la forme d'onde du signal large bande.

Par exemple, l'entier $j$ peut être choisi de sorte que deux signaux canalisés selon deux canaux fréquentiels adjacents sont retardés du retard $\Delta T$. Un code d'étalement étant à support de corrélation borné, on évite ainsi les interférences entre les codes d'étalement de deux signaux canalisés transmis successivement avec un retard au moins égal à $\Delta T$.

Dans une étape 203, les différents signaux canalisés et retardés sont sommés afin de produire un unique signal 204 compressé nécessitant pour sa transmission une bande de fréquences au plus égale à la bande d'un canal.

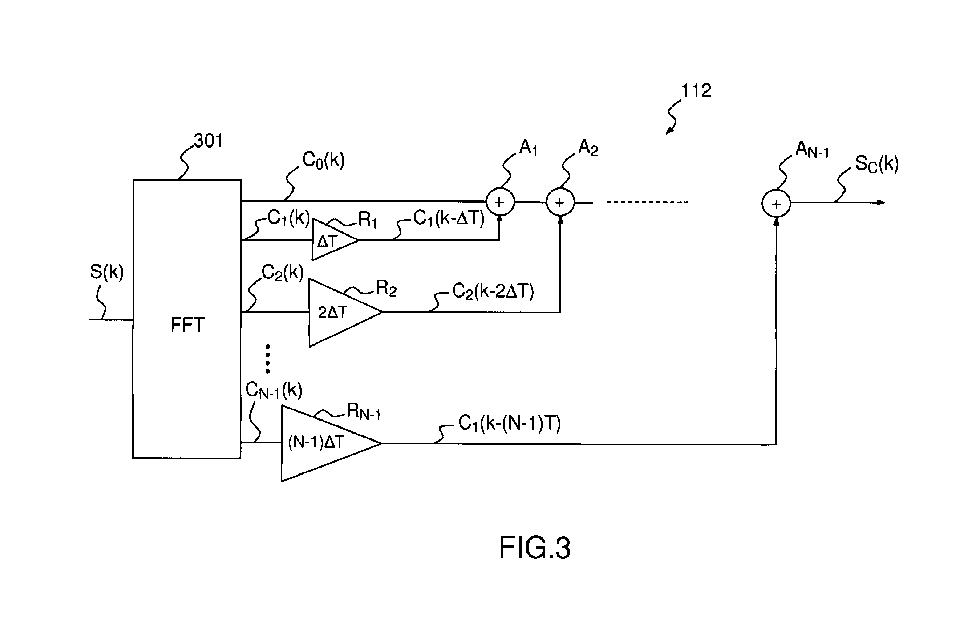

La figure 3 représente un synoptique d'un dispositif de compression 112 destiné à être implémenté dans un terminal GNSS 101,102,103 et comprenant des moyens adaptés pour mettre en oeuvre le procédé décrit à la figure 2.

Le dispositif de compression 112 reçoit en entrée, à l'instant k, le signal S(k) de radio-navigation par satellite, préalablement numérisé et produit en sortie un signal $S_c(k)$ compressé pour transmission au moyen de communication bande étroite 113.

Le dispositif de compression 112 comporte un premier module 301 de transformée de Fourier rapide qui délivre en sortie une pluralité N de signaux canalisés $C_0(k)$, $C_1(k)$, $C_2(k)$... $C_{N-1}(k)$. Le signal canalisé $C_j(k)$ produit sur le canal d'indice j, avec j un entier compris entre 0 et N-1 peut être représenté à l'aide de la relation suivante :

$$C_j(k) = \frac{1}{N} \sum_{n=1}^{N} S(k+n) \exp(-2i\pi \frac{j.n}{N})$$

Le dispositif de compression 112 comporte en outre des moyens $R_1, R_2, ... R_{N-1}$ pour retarder au moins N-1 signaux canalisés en sortie du premier module 301 d'un retard $j.\Delta T$ différent pour chaque canal. Par exemple, un arrangement possible des retards consiste à ne pas retarder le premier signal canalisé $C_0(k)$, à retarder d'un retard égal à $\Delta T$ le deuxième signal canalisé $C_1(k)$, à retarder d'un retard égal à $2\Delta T$ le troisième signal canalisé $C_2(k)$ et ainsi de suite. Tout autre arrangement peut être envisagé à condition que les retards soient tous distincts d'un canal à l'autre.

Le dispositif de compression 112 comporte en outre des accumulateurs $A_1, A_2...A_{N-1}$ pour sommer lesdits signaux canalisés décalés $C_0(k)$, $C_1(k)$, $C_2(k)$, ... $C_{N-1}(k)$ ensemble afin de produire le signal compressé $S_c(k)$ qui s'écrit à l'aide de la relation suivante :

$$S_c(k) = \sum_{j=0}^{N-1} C_j(k - j\Delta T)$$

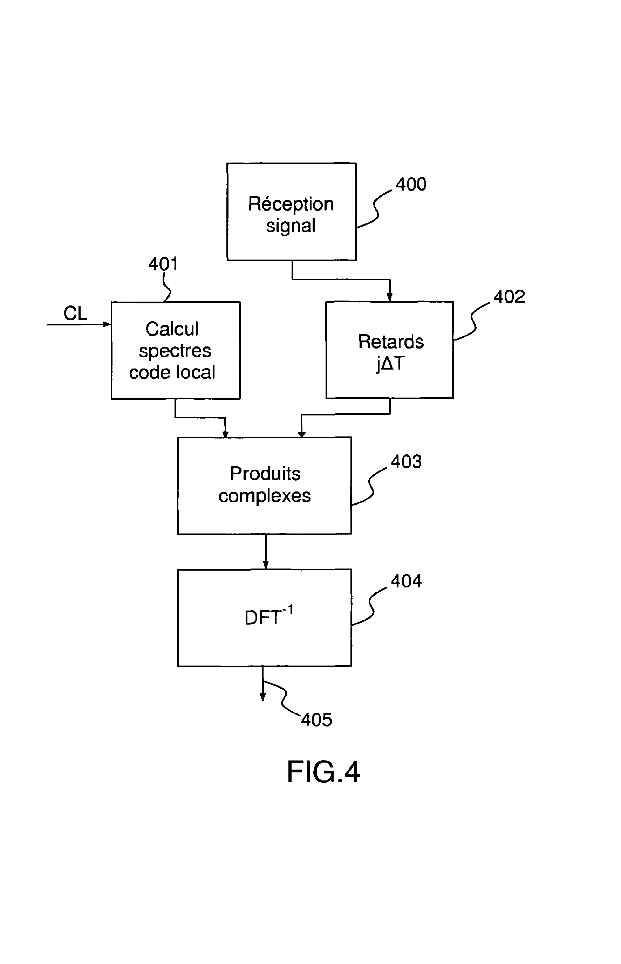

La figure 4 représente un organigramme du procédé, selon l'invention, de calcul de la fonction de corrélation du code d'étalement d'un signal de radio-navigation compressé selon le procédé de la figure 2.

Un tel procédé est exécuté par un terminal récepteur ou une station de réception comprenant des moyens pour communiquer avec un terminal GNSS émetteur au travers d'un canal bande étroite.

Le procédé de calcul selon la figure 4 comprend au moins une étape 400 de réception d'un signal de radio-navigation compressé selon le procédé de compression décrit à la figure 2.

Il comporte en outre une étape 401 de calcul, à partir d'un code d'étalement généré localement, des spectres de ce code local dans les différentes bandes de fréquence correspondant aux canalisations fréquentielles opérées sur le signal de radio-navigation lors de sa compression. Cette étape peut, par exemple être réalisée en appliquant une transformée de Fourier directe sur la séquence du code d'étalement généré localement du même type que celle appliquée lors de l'exécution du procédé de compression par le dispositif 112.

Dans une étape 402, le signal reçu à l'étape 400 est retardé d'une pluralité de retards distincts entre eux afin de générer une pluralité de signaux retardés. Les retards appliqués doivent correspondre aux retards utilisés pour générer le signal compressé par application du procédé selon la figure 2.

Avantageusement les retards temporels peuvent être égaux à $j.\Delta T$, où j est un entier positif différent pour chaque signal retardé et $\Delta T$ est un retard temporel fixe prédéterminé au moins supérieur à la durée du support de corrélation du code d'étalement du signal . Par exemple, l'entier j peut être choisi de sorte que deux signaux retardés consécutifs le sont du retard $\Delta T$.

Dans une étape 403, un produit complexe deux à deux est effectué entre un spectre obtenu en sortie de l'étape 401, après conjugaison complexe et un signal retardé obtenu en sortie de l'étape 402. Avantageusement, chaque retard est associé à un canal fréquentiel selon un agencement identique à celui mis en oeuvre lors de la compression du signal de radio-navigation selon le procédé de la figure 2. Le produit de convolution est effectué en respectant cette association.

Dans une étape 404, une transformée de Fourier inverse est appliquée au signal constitué des différents produits de convolution obtenus en sortie de l'étape 403 afin d'obtenir le résultat de la corrélation 405 entre le code d'étalement généré localement et le signal de radio-navigation.

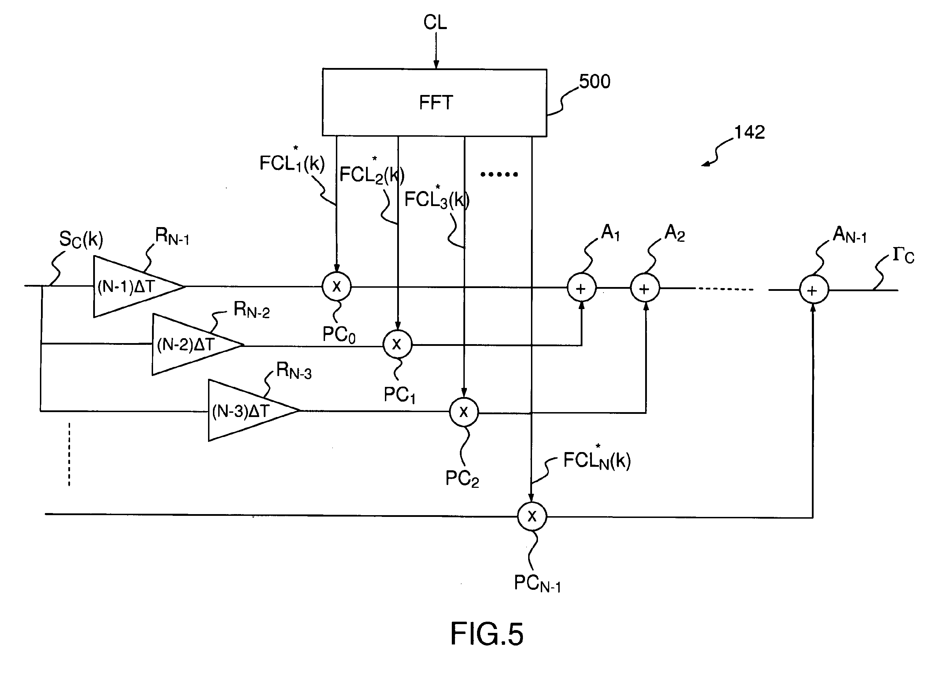

La figure 5 représente un synoptique d'un module de corrélation destiné à être implémenté dans un terminal récepteur et comprenant des moyens adaptés pour mettre en oeuvre le procédé de calcul décrit à la figure 4.

Le module de corrélation 142 reçoit en entrée un signal de radio-navigation compressé et numérisé $S_c(n)$. Il comprend un premier module 500 de transformée de Fourier directe qui reçoit en entrée une réplique de la séquence d'un code d'étalement généré localement CL et produit en sortie une pluralité de signaux canalisés $FCL_1^*(k),..., FCL_N^*(k)$.

Le module de corrélation 142 comprend en outre des moyens $R_1,R_2,...R_{N-1}$ pour retarder le signal reçu d'une pluralité de retards $k.\Delta T$ différents. Par exemple, un arrangement possible des retards consiste à produire N-1 signaux retardés à partir du signal reçu, chaque signal étant retardé d'un retard multiple de $\Delta T$ différent. Tout autre arrangement peut être envisagé à condition que les retards soient tous distincts entre eux et correspondent aux retards utilisés pour générer le signal compressé.

Le module de corrélation 142 comprend également des moyens $PC_0$, $PC_1$,... $PC_{N-1}$ de calcul pour réaliser un produit complexe entre un signal canalisé en sortie du premier module 500, après conjugaison complexe, et un signal retardé.

Avantageusement, les retards sont réalisés de sorte à compenser les retards mis en oeuvre lors de la compression du signal de radio-navigation.

Autrement dit, en reprenant l'exemple donné ci-dessus à l'appui de la figure 3, si les retards appliqués à l'émission sur les canaux d'indice 0 à N-1 sont respectivement égaux à 0, $\Delta T$, $2\Delta T$, ...,$(N-2)\Delta T$, $(N-1)\Delta T$ alors les retards appliqués en réception par le module de corrélation 142 pour reconstituer les canaux d'indice 0 à N-1 devront être respectivement égaux à $(N-1)\Delta T$, $(N-2)\Delta T$, ..., $2\Delta T$, $\Delta T$, 0.

De façon plus générale, les retards appliqués par le module de corrélation 142 sont configurés de sorte que, pour chaque canal d'indice 0 à N-1, le retard T' appliqué est égal à T - $M\Delta T$ avec T le retard appliqué pour le même canal lors de la compression du signal et $M\Delta T$ un retard constant quel que soit le canal d'indice 0 à N-1 et au moins égal au retard le plus élevé appliqué lors de la compression du signal.

Le module de corrélation 142 comprend enfin des moyens pour réaliser une transformée de Fourier inverse du signal composé des sorties de chaque produit complexe. Avantageusement, la transformée de Fourier inverse peut être réalisée en intégrant au calcul du produit complexe, une multiplication par le terme $\exp(2i\pi(jk/N))$ et en utilisant une série d'additionneurs $A_1,A_2...A_{N-1}$ pour accumuler les différents termes. Plus précisément, le terme $FCL_j^*(k)$ est multiplié par le terme $\exp(2i\pi(jk/N))$.

Le résultat final du calcul de corrélation peut être exprimé à l'aide de la relation suivante :

$$\Gamma_c(0) = \sum_{j=0}^{N-1} (FCL_j^*(k) \otimes S_c(k - j\Delta T)) \exp(2i\pi\frac{jk}{N})$$

Ce résultat est identique à celui qui serait obtenu en effectuant une corrélation directe entre le code d'étalement généré localement et le signal de radio-navigation large bande (non compressé) car le décalage minimum $\Delta T$ entre deux signaux canalisés est supérieur ou égal à la durée du support de corrélation du code d'étalement filtré dans chaque canal à bande étroite. Ainsi, il n'y a pas d'interférence entre les calculs de corrélation réalisés pour chaque signal canalisé.

Le calcul de corrélation précité peut être avantageusement utilisé au sein d'une boucle de synchronisation temporelle du code d'étalement. En particulier, la fonction de corrélation peut être calculée pour différentes valeurs de retard ou d'avance du signal reçu et alimenter un discriminateur de code d'étalement.

Dans une variante de réalisation de l'invention, la compression du signal de radio-navigation large bande, telle qu'explicitée aux figures 2 et 3, peut être réalisée en sélectionnant un sous-ensemble des canaux fréquentiels en sortie de l'étape 201 de canalisation. Par exemple, un nombre prédéterminé M de canaux peut être sélectionné parmi les N canaux disponibles qui couvrent la totalité de la bande utile. Dans ce cas, seuls les M signaux canalisés correspondant aux canaux sélectionnés sont retenus pour la génération du signal compressé. Autrement dit, seuls ces M signaux sont retardés (étape 202) et accumulés (étape 204). Cette variante permet de limiter la complexité des traitements mais aussi de lutter contre d'éventuelles interférences, sélectives en fréquence, impactant le signal de radio-navigation. Avantageusement, les M canaux sélectionnés peuvent être choisis selon un tirage aléatoire réalisé périodiquement afin que tous les canaux couvrant la bande utile du signal GNSS soient retenus au bout d'une période de temps donnée. Tout autre sélection est envisageable en fonction des contraintes radio-électriques ou de complexité de mise en oeuvre.

Selon cette variante de l'invention, les M canaux retenus en émission doivent être communiqués au récepteur afin de réaliser le calcul de la fonction de corrélation en sélectionnant les mêmes canaux fréquentiels.

Le dispositif de compression et le module de calcul de la fonction de corrélation selon l'invention peuvent être réalisés par des moyens matériels et/ou logiciels. Par exemple, les calculs de transformée de Fourier rapide peuvent être réalisés par un calculateur logiciel et les retards peuvent être réalisés par des lignes à retard.

**Revendications**

1. Procédé de compression d'un signal de radio-navigation par satellite large bande pour sa transmission sur un canal bande étroite, ledit procédé étant **caractérisé en ce qu'**il comporte les étapes suivantes :

- Une étape (200) de réception d'un signal de radio-navigation par satellite,
- Une étape (201) de transformation spectrale dudit signal en une pluralité N de canaux fréquentiels de largeur de bande réduite,
- Une étape (202) de décalage temporel de chacun des signaux canalisés d'un retard prédéterminé distinct, le retard étant configuré de sorte à être supérieur à la durée du support de corrélation du code d'étalement d'un signal canalisé,
- Une étape (203) d'accumulation des signaux canalisés décalés pour produire un signal compressé (204).

2.  Procédé de compression selon la revendication 1 dans lequel l'étape (201) de transformation spectrale est réalisée au moyen d'une transformée de Fourier rapide.

3.  Procédé de compression selon l'une des revendications 1 ou 2 dans lequel ledit retard prédéterminé est égal à un multiple, différent pour chacun des signaux canalisés, d'un retard ΔT prédéterminé de durée supérieure à la durée du support de corrélation du code d'étalement d'un signal canalisé.

4.  Procédé de compression selon la revendication 3 dans lequel la durée du support de corrélation du code d'étalement d'un signal canalisé est égale à l'inverse de la largeur d'un canal fréquentiel.

5.  Procédé de compression selon l'une des revendications 1 à 4 dans lequel la pluralité N de canaux fréquentiels couvre l'intégralité de la large bande du signal de radio-navigation.

6.  Procédé de compression selon l'une des revendications 1 à 4 comportant en outre une étape de sélection d'un sous-ensemble de M canaux parmi la pluralité N de canaux fréquentiels, lesdites étapes de décalage temporel (202) et d'accumulation (203) étant réalisées uniquement pour les M signaux canalisés dudit sous-ensemble.

7.  Procédé de compression selon la revendication 6 dans lequel la sélection dudit sous-ensemble de M canaux est réalisée périodiquement par un tirage aléatoire parmi les N canaux disponibles.

8.  Procédé de calcul de la fonction de corrélation du code d'étalement d'un signal de radio-navigation par satellite compressé (204) par application du procédé de compression selon l'une des revendications 1 à 6 **caractérisé en ce qu'**il comporte les étapes suivantes :

- Une étape (400) de réception d'un signal compressé (204) transmis sur bande étroite,
- Une étape (401) de transformation spectrale d'un code d'étalement (CL) généré localement en une pluralité N de canaux fréquentiels,
- Une étape (402) de décalage temporel dudit signal compressé reçu d'une pluralité de retards prédéterminés distincts pour obtenir une pluralité de signaux retardés, lesdits retards étant configurés de sorte à être supérieurs à la durée du support de corrélation du code d'étalement canalisé, le nombre de signaux retardés étant égal au nombre N de canaux fréquentiels,
- Une étape (403) de calcul du produit complexe conjugué deux à deux entre un signal retardé et un canal du spectre dudit code d'étalement généré localement (CL) pour obtenir un signal intermédiaire,
- Une étape (404) de calcul de la transformée de Fourier inverse dudit signal intermédiaire pour obtenir la fonction de corrélation du code d'étalement dudit signal de radio-navigation.

9.  Procédé de calcul selon la revendication 8 dans lequel l'étape (401) de transformation spectrale est réalisée au moyen d'une transformée de Fourier rapide.

10. Procédé de calcul selon l'une des revendications 8 ou 9 dans lequel lesdits retards prédéterminés sont égaux à un multiple, différent pour chaque retard, d'un retard ΔT prédéterminé de durée supérieure à la durée du support de corrélation du code d'étalement canalisé.

11. Dispositif (112) de compression d'un signal de radio-navigation par satellite large bande pour sa transmission sur un canal à bande étroite **caractérisé en ce qu'**il comporte :

- Un moyen (301) pour transformer spectralement ledit signal en une pluralité N de canaux fréquentiels de largeur de bande réduite,

- Des moyens ($R_1$,$R_2$...$R_{N-1}$) pour décaler temporellement chacun des signaux canalisés d'un retard prédéterminé distinct, le retard étant configuré de sorte à être supérieur à la durée du support de corrélation d'un signal canalisé ,

- Des moyens ($A_1$,$A_2$...$A_{N-1}$) pour accumuler lesdits signaux canalisés décalés pour produire un signal compressé.

**12.** Terminal émetteur (101,102,103) comprenant des moyens (110,111) de réception d'un signal de radio-navigation par satellite, un dispositif (112) de compression dudit signal de radio-navigation par satellite selon la revendication 11 et des moyens (113) de transmission dudit signal compressé sur un canal à bande étroite.

**13.** Dispositif (142) de calcul de la fonction de corrélation du code d'étalement d'un signal de radio-navigation par satellite compressé par application du procédé de compression selon l'une des revendications 1 à 6 **caractérisé en ce qu'**il comporte:

- Un moyen (500) pour transformer spectralement un code d'étalement (CL) généré localement en une pluralité N de canaux fréquentiels,
- Des moyens ($R_1$,$R_2$...$R_{N-1}$) pour décaler temporellement ledit signal de radio-navigation d'une pluralité de retards prédéterminés distincts pour obtenir une pluralité de signaux retardés, lesdits retards étant configurés de sorte à être supérieurs à la durée du support de corrélation du code d'étalement canalisé,
- Des moyens ($PC_0$,$PC_1$,...$PC_{N-1}$) de calcul du produit complexe conjugué deux à deux entre un signal retardé et un canal du spectre dudit code d'étalement généré localement (CL) pour obtenir un signal intermédiaire,
- Des moyens de calcul de la transformée de Fourier inverse dudit signal intermédiaire pour obtenir la fonction de corrélation du code d'étalement dudit signal de radio-navigation.

**14.** Station réceptrice (104) comprenant des moyens (140,141) pour recevoir un signal de radio-navigation compressé sur bande étroite et un dispositif (142), selon la revendication 13, de calcul de la fonction de corrélation du code d'étalement dudit signal de radio-navigation compressé reçu.

**Patentansprüche**

**1.** Verfahren zum Komprimieren eines Breitband-Satellitenfunknavigationssignals, so dass es auf einem Schmalbandkanal gesendet werden kann, wobei das Verfahren **dadurch gekennzeichnet ist, dass** es die folgenden Schritte beinhaltet:

einen Schritt (200) des Empfangens eines Satellitenfunknavigationssignals;
einen Schritt (201) der Spektraltransformation des Signals in eine Mehrzahl N von Frequenzkanälen mit reduzierter Bandbreite;
einen Schritt (202) des zeitlichen Verschiebens jedes der kanalisierten Signale um eine separate vorbestimmte Verzögerung, wobei die Verzögerung so konfiguriert ist, dass sie größer ist als die Dauer der Korrelationsunterstützung des Spreizcodes eines kanalisierten Signals;
einen Schritt (203) des Akkumulierens von verschobenen kanalisierten Signalen, um ein komprimiertes Signal (204) zu erzeugen.

**2.** Kompressionsverfahren nach Anspruch 1, wobei der Spektraltransformationsschritt (201) mittels schneller Fourier-Transformation ausgeführt wird.

**3.** Kompressionsverfahren nach Anspruch 1 oder 2, wobei die vorbestimmte Verzögerung gleich einem Vielfachen, das sich für jedes der kanalisierten Signale unterscheidet, einer vorbestimmten Verzögerung AT ist, deren Dauer größer ist als die Dauer der Korrelationsunterstützung des Spreizcode eines kanalisierten Signals.

**4.** Kompressionsverfahren nach Anspruch 3, wobei die Dauer der Korrelationsunterstützung des Spreizcodes eines kanalisierten Signals gleich der Umkehr der Breite eines Frequenzkanals ist.

**5.** Kompressionsverfahren nach einem der Ansprüche 1 bis 4, wobei die Mehrzahl N von Frequenzkanälen das gesamte Breitband des Funknavigationssignals abdeckt.

**6.** Kompressionsverfahren nach einem der Ansprüche 1 bis 4, das ferner einen Schritt des Auswählens einer Teilsatzes von M Kanälen aus der Mehrzahl N von Frequenzkanälen beinhaltet, wobei die Schritte des zeitlichen Verschiebens (202) und Akkumulierens (203) nur für die M kanalisierten Signale dieses Teilsatzes ausgeführt werden.

7. Kompressionsverfahren nach Anspruch 6, wobei der Teilsatz von M Kanälen periodisch durch eine zufällige Auswahl aus den N verfügbaren Kanälen ausgewählt wird.

8. Verfahren zum Berechnen der Korrelationsfunktion des Spreizcodes eines Satelliten-Funknavigationssignals (204), das durch Anwenden des Kompressionsverfahrens nach einem der Ansprüche 1 bis 6 komprimiert wird, **dadurch gekennzeichnet, dass** es die folgenden Schritte beinhaltet:

einen Schritt (400) des Empfangens eines auf einem Schmalband gesendeten komprimierten Signals (204);
einen Schritt (401) des Spektraltransformierens eines lokal erzeugten Spreizcodes (CL) in eine Mehrzahl N von Frequenzkanälen;
einen Schritt (402) des zeitlichen Verschiebens des empfangenen komprimierten Signals um mehrere separate vorbestimmte Verzögerungen, um mehrere verzögerte Signale zu erhalten, wobei die Verzögerungen so konfiguriert sind, dass sie größer sind als die Dauer der Korrelationsunterstützung des kanalisierten Spreizcodes, wobei die Anzahl von verzögerten Signalen gleich der Anzahl N von Frequenzkanälen ist;
einen Schritt (403) des Berechnens des komplexen Produkts, das paarweise zwischen einem verzögerten Signal und einem Kanal des Spektrums des lokal erzeugten Spreizcodes (CL) konjugiert wird, um ein Zwischensignal zu erhalten;
einen Schritt (404) des Berechnens der inversen Fourier-Transformation des Zwischensignals, um die Korrelationsfunktion des Spreizcodes des Funknavigationssignals zu erhalten.

9. Berechnungsverfahren nach Anspruch 8, wobei der Spektraltransformationsschritt (401) mittels einer schnellen Fourier-Transformation ausgeführt wird.

10. Berechnungsverfahren nach Anspruch 8 oder 9, wobei die vorbestimmten Verzögerungen gleich einem Vielfachen, das für jede Verzögerung unterschiedlich ist, einer vorbestimmten Verzögerung $\Delta T$ sind, deren Dauer größer ist als die Dauer der Korrelationsunterstützung des kanalisierten Spreizcodes.

11. Vorrichtung (112) zum Komprimieren eines Breitband-Satellitenfunknavigationssignals, so dass es auf einem Schmalbandkanal gesendet werden kann, **dadurch gekennzeichnet, dass** sie Folgendes umfasst:

ein Mittel (301) zur Spektraltransformation des Signals in eine Mehrzahl N von Frequenzkanälen mit reduzierter Bandbreite;
Mittel $(R_1, R_2 ... R_{N-1})$ zum zeitlichen Verschieben jedes der kanalisierten Signale um eine separate vorbestimmte Verzögerung, wobei die Verzögerung so konfiguriert ist, dass sie größer ist als die Dauer der Korrelationsunterstützung eines kanalisierten Signals;
Mittel $(A_1, A_2 ... A_{N-1})$ zum Akkumulieren der verschobenen kanalisierten Signale, um ein komprimiertes Signal zu erzeugen.

12. Sendeterminal (101, 102, 103) mit Mitteln (110, 111) zum Empfangen eines Satellitenfunknavigationssignals, einer Vorrichtung (112) zum Komprimieren des Satellitenfunknavigationssignals nach Anspruch 11 und Mitteln (113) zum Senden des komprimierten Signals auf einem Schmalbandkanal.

13. Vorrichtung (142) zum Berechnen der Korrelationsfunktion des Spreizcodes eines Satellitenfunknavigationssignals, komprimiert durch Anwenden des Kompressionsverfahrens nach einem der Ansprüche 1 bis 6, **dadurch gekennzeichnet, dass** sie Folgendes umfasst:

ein Mittel (500) zum Spektraltransformieren eines lokal erzeugten Spreizcodes (CL) in eine Mehrzahl N von Frequenzkanälen;
Mittel $(R_1, R_2 ...R_{N-1})$ zum zeitlichen Verschieben des Funknavigationssignals um mehrere separate vorbestimmte Verzögerungen, um mehrere verzögerte Signale zu erhalten, wobei die Verzögerungen so konfiguriert sind, dass sie größer sind als die Dauer der Korrelationsunterstützung des gelenkten Spreizcodes;
Mittel $(PC_0, PC_1 ... PC_{N-1})$ zum Berechnen des komplexen Produktes, das paarweise zwischen einem verzögerten Kanal und einem Kanal des Spektrums des lokal erzeugten Spreizcodes (CL) konjugiert ist, um ein Zwischensignal zu erhalten;
Mittel zum Berechnen der inversen Fourier-Transformation des Zwischensignals, um die Korrelationsfunktion des Spreizcodes des Funknavigationssignals zu erhalten.

14. Empfangsstation (104) mit Mitteln (140, 141) zum Empfangen eines komprimierten Funknavigationssignals auf einem Schmalband und einer Vorrichtung (142) nach Anspruch 13 zum Berechnen der Korrelationsfunktion des Spreizcodes des empfangenen komprimierten Funknavigationssignals.

**Claims**

1. A method for compressing a broadband satellite radio navigation signal so that it can be transmitted on a narrowband channel, said method being **characterised in that** it comprises the following steps:

   a step (200) of receiving a satellite radio navigation signal;
   a step (201) of spectrally converting said signal into a plurality N of frequency channels with a reduced bandwidth;
   a step (202) of time-shifting each of the channelled signals by a distinct predetermined delay, said delay being configured so as to be greater than the duration of the correlation support of the spreading code of a channelled signal;
   a step (203) of accumulating time-shifted channelled signals so as to produce a compressed signal (204).

2. The compression method according to claim 1, wherein said step (201) of spectrally converting is carried out by means of a fast Fourier transform.

3. The compression method according to any one of claims 1 or 2, wherein said predetermined delay is equal to a multiple, which is different for each of the channelled signals, of a predetermined delay $\Delta T$, the duration of which is greater than the duration of the correlation support of the spreading code of a channelled signal.

4. The compression method according to claim 3, wherein the duration of the correlation support of the spreading code of a channelled signal is equal to the inverse of the width of a frequency channel.

5. The compression method according to any one of claims 1 to 4, wherein the plurality N of frequency channels covers the entire broadband of the radio navigation signal.

6. The compression method according to any one of claims 1 to 4, further comprising a step of selecting a sub-set of M channels from among the plurality N of frequency channels, said steps of time-shifting (202) and of accumulating (203) being solely carried out for the M channelled signals of said sub-set.

7. The compression method according to claim 6, wherein said sub-set of M channels is periodically selected by a random selection from among the N available channels.

8. A method for computing the correlation function of the spreading code of a satellite radio navigation signal (204) that is compressed by applying the compression method according to any one of claims 1 to 6, **characterised in that** it composes the following steps:

   a step (400) of receiving a compressed signal (204) transmitted on a narrowband;
   a step (401) of spectrally converting a locally generated spreading code (CL) into a plurality N of frequency channels;
   a step (402) of time-shifting said received compressed signal by a plurality of distinct predetermined delays so as to obtain a plurality of delayed signals, said delays being configured so as to be greater than the duration of the correlation support of the channelled spreading code, the number of delayed signals being equal to the number N of frequency channels;
   a step (403) of computing the complex product that is pairwise conjugated between a delayed signal and a channel of the spectrum of said locally generated spreading code (CL) so as to obtain an intermediate signal;
   a step (404) of computing the inverse Fourier transform of said intermediate signal so as to obtain the correlation function of the spreading code of said radio navigation signal.

9. The computing method according to claim 8, wherein said step (401) of spectrally converting is carried out by means of a fast Fourier transform.

**10.** The computing method according to any one of claims 8 or 9, wherein said predetermined delays are equal to a multiple, which is different for each delay, of a predetermined delay $\Delta T$, the duration of which is greater than the duration of the correlation support of the channelled spreading code.

**11.** A device (112) for compressing a broadband satellite radio navigation signal so that it can be transmitted on a narrowband channel, **characterised in that** it comprises:

a means (301) for spectrally converting said signal into a plurality N of frequency channels with a reduced bandwidth;
means ($R_1$, $R_2$ ... $R_{N-1}$) for time-shifting each of said channelled signals by a distinct predetermined delay, said delay being configured so as to be greater than the duration of the correlation support of a channelled signal;
means ($A_1$, $A_2$ ... $A_{N-1}$) for accumulating said time-shifted channelled signals so as to produce a compressed signal.

**12.** A transmitter terminal (101, 102, 103) comprising means (110, 111) for receiving a satellite radio navigation signal, a device (112) for compressing said satellite radio navigation signal according to claim 11 and means (113) for transmitting said compressed signal on a narrowband channel.

**13.** A device (142) for computing the correlation function of the spreading code of a satellite radio navigation signal that is compressed by applying the compression method according to any one of claims 1 to 6, **characterised in that** it comprises:

a means (500) for spectrally converting a locally generated spreading code (CL) into a plurality N of frequency channels;
means ($R_1$, $R_2$ ... $R_{N-1}$) for time-shifting said radio navigation signal by a plurality of distinct predetermined delays so as to obtain a plurality of delayed signals, said delays being configured so as to be greater than the duration of the correlation support of the channelled spreading code;
means ($PC_0$, $PC_1$ ... $PC_{N-1}$) for computing the complex product that is pairwise conjugated between a delayed signal and a channel of the spectrum of said locally generated spreading code (CL) so as to obtain an intermediate signal;
means for computing the inverse Fourier transform of said intermediate signal so as to obtain the correlation function of the spreading code of said radio navigation signal.

**14.** A receiving station (104) comprising means (140, 141) for receiving a compressed radio navigation signal on a narrowband and a device (142), according to claim 13, for computing the correlation function of the spreading code of said received compressed radio navigation signal.

FIG.1

FIG.2

FIG.3

EP 2 790 035 B1

Réception
signal

400

401

CL →

Calcul
spectres
code local

Retards
jΔT

402

Produits
complexes

403

DFT⁻¹

404

405

FIG.4

FIG.5

EP 2 790 035 B1

**EP 2 790 035 B1**

## RÉFÉRENCES CITÉES DANS LA DESCRIPTION

**Documents brevets cités dans la description**

- FR 1201709